# EUROPEAN PATENT APPLICATION

(11) **EP 4 625 807 A1**
(43) Date of publication of application: **01.10.2025**
(21) Application number: 25165018.0
(22) Date of filing: 20.03.2025
(51) Int. Cl.: H02P 9/00, H02M 1/00, H02M 3/158, H02M 7/12

(54) **POWER CONVERTER AND SYSTEM FOR AN ENGINE STARTER GENERATOR**

(30) Priority: 29.03.2024 US 202463571746 P
(71) Applicant: General Electric Company, Cincinnati, Ohio 45215 (US)
(72) Inventor: JIA, Xiaochuan, Evendale, 45215 (US); GULLEY, Jason Randall, Evendale, 45215 (US); HUANG, Hao, Evendale, 45215 (US)
(74) Representative: Openshaw & Co.

(57) **Abstract**

A power converter system (101) includes an asynchronous induction generator (102) electrically coupled to an inverter/converter/controller (ICC (104)). The ICC (104) is coupleable to an electrical load (110). The ICC (104) can include an AC-DC converter (106) and a DC-DC converter (120). The DC-DC converter (120) is configured to operate at a duty cycle substantially equal to 1 in a first operating mode. In the event of a short-circuit fault in the electrical load (110), the DC-DC converter (120) is configured to operate at a duty cycle less than 1 in a second operating mode.

## Description

### CROSS REFERENCE TO RELATED APPLICATION(S)

This application claims priority to and benefit of US Provisional Patent Application No. 63/571,746 filed March 29, 2024, which is incorporated herein in its entirety.

### TECHNICAL FIELD

This disclosure relates generally to a power converter system for an electrical machine. More specifically, this disclosure relates to power converter and system for an induction generator, such as an induction starter/generator, for an aircraft engine.

### BACKGROUND

Electric machines, such as electric motors or electric generators, are used in energy conversion. In the aircraft industry, it is common to combine a motor mode and a generator mode in the same electric machine, where the electric machine in motor mode functions to start an engine, and, depending on the mode, also functions as a generator. Regardless of the mode, an electric machine typically includes a rotor having rotor windings that are driven to rotate by a source of rotation, such as a mechanical or electrical machine, which for some aircraft may be a gas turbine engine.

### BRIEF DESCRIPTION OF THE DRAWINGS

A full and enabling disclosure of the present description, including the best mode thereof, directed to one of ordinary skill in the art, is set forth in the specification, which refers to the appended FIGS., in which:
FIG. 1 is an isometric view of a gas turbine engine having a generator, in accordance with various aspects described herein.
FIG. 2 is an isometric view of an exterior of the generator of FIG. 1, in accordance with various aspects described herein.
FIG. 3 is a schematic diagram of a power converter system in accordance with various aspects described herein.
FIG. 4 is a schematic block diagram of a generator induction machine having a single-pass oil circuit in accordance with various aspects described herein.

### DETAILED DESCRIPTION

The exemplary drawings are for purposes of illustration only and the dimensions, positions, order and relative sizes reflected in the drawings attached hereto can vary. Furthermore, the number of, and placement of, the various components depicted in the Figures are also non-limiting examples of aspects associated with the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all aspects described herein should be considered exemplary.

As used herein, the term "set" or a "set" of elements can be any number of elements, including only one.

As used herein, the terms "first," "second," and "third" and the like, can be used interchangeably to distinguish one component from another and are not intended to signify location or importance of the individual components. The singular forms "a", "an", and "the" include plural references unless the context clearly dictates otherwise.

Approximating language, may be used herein throughout the specification and claims, is applied to modify any quantitative representation that could permissibly vary without resulting in a change in the basic function to which it is related. Accordingly, a value modified by a term or terms, such as "about", "approximately", "generally", and "substantially", are not to be limited to the precise value specified. In at least some instances, the approximating language may correspond to the precision of an instrument for measuring the value, or the precision of the methods or machines for constructing or manufacturing the components and/or circuits. In at least some instances, the approximating language may correspond to the precision of an instrument for measuring the value, or the precision of the methods or machines for constructing or manufacturing the components and/or circuits. For example, the approximating language may refer to being within a 1, 2, 4, 5, 10, 15, or 20 percent margin in either individual values, range(s) of values and/or endpoints defining range(s) of values. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

All directional references (e.g., inner, outer, upper, lower, radial, axial, proximal, distal, upper, lower, upward, downward, left, right, lateral, front, back, top, bottom, above, below, vertical, horizontal, clockwise, counterclockwise, upstream, downstream, aft, proximate, etc.) are only used for identification purposes to aid the reader's understanding of the present disclosure, and do not create limitations, particularly as to the position, orientation, or use of the present disclosure. It is also to be understood that the specific aspects illustrated in the attached drawings, and described in the following specification, are simply exemplary aspects of the disclosure. Hence, specific dimensions and other physical characteristics related to the aspects disclosed herein are not to be considered as limiting.

As used herein, the terms "axial" or "axially" refer to a dimension along a longitudinal axis of a generator or along a longitudinal axis of a component disposed within the generator.

As used herein, the terms "radial" or "radially" refer to a dimension extending between a center longitudinal axis, an outer circumference, or a circular or annular component disposed thereof.

Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other. In non-limiting examples, connections or disconnections can be selectively configured to provide, enable, disable, or the like, an electrical connection between respective elements. Non-limiting example power distribution bus connections or disconnections can be enabled or operated by way of switching, bus tie logic, or any other connectors configured to enable or disable the energizing of electrical loads applied to the bus. Additionally, as used herein, "electrical connection" or "electrically coupled" can include a wired or wireless connection. The exemplary drawings are for purposes of illustration only and the dimensions, positions, order and relative sizes reflected in the drawings attached hereto can vary.

While terms such as "voltage", "current", and "power" can be used herein, it will be evident to one skilled in the art that these terms can be interrelated when describing aspects of the electrical circuit, or circuit operations. Thus, as used herein, the term "power" can be representative of a voltage, a current, or both the voltage and current.

As used herein, the term "semiconductor device" refers to a semiconductor component, device, die or chip that perform specific functions such as a power transistor, power diode, or analog amplifier, as non-limiting examples. Typical semiconductor devices can include input/output (I/O) interconnections which are used to connect the semiconductor device to external circuitry and are electrically coupled to internal elements within the semiconductor device. The semiconductor devices described herein can be power semiconductor devices used as electrically controllable switches or converters in power electronic circuits, such as switched mode power supplies, for example. Non-limiting examples of semiconductor devices include insulated gate bipolar transistors (IGBTs), metal oxide semiconductor field effect transistors (MOSFETs), bipolar junction transistors (BJTs), integrated gate-commutated thyristors (IGCTs), gate turn-off (GTO) thyristors, Silicon Controlled Rectifiers (SCRs), diodes or other devices or combinations of devices including materials such as Silicon (Si), Silicon Carbide (SiC), Gallium Nitride (GaN), and Gallium Arsenide (GaAs). Semiconductor devices can also be digital logic devices, such as a microprocessor, microcontroller, memory device, video processor, or an Application Specific Integrated Circuit (ASIC), as non-limiting examples.

As used herein, a "switching device", or a "switch" refers to an electrical device that can be controllable to operate or toggle between a first state, wherein the switching device is "closed" to enable a current flow from a switch input to a switch output, and a second state, wherein the switching device is "open" to prevent a current from flow between the switch input and switch output. In non-limiting examples, connections or disconnections, such as connections enabled or disabled by the controllable switching element, can be selectively configured to provide, enable, disable, or the like, an electrical connection between respective elements. One exemplary implementation can include a MOSFET switch, which can be controlled by an applied voltage on the switch. Additional switching devices or additional silicon-based power switches can be included. Other non-limiting aspects can include any switching device that can switch a state between a low resistance state and a high resistance state in response to an electrical signal. For example, the switching devices in various aspects can comprise, without limitation, any type of switching device including for example, transistors, gate commutated thyristors, field effect transistors (FETs), IGBTs, MOSFETs, gate turn-off thyristors, static induction transistors, static induction thyristors, or combinations thereof.

As used herein, the term "duty cycle" refers to a ratio between the time a switching device in a circuit that is conducting or "ON" and the switching period that is "ON" plus "OFF." A constant-ON duty cycle is equal to one, and a constant-OFF duty cycle is equal to zero.

As used herein, a "freewheeling semiconductor device" refers to any semiconductor device electrically coupled in parallel with an inductor in a DC-DC converter configured to operatively eliminate a sudden voltage spike that occurs across the inductor due to an interruption of electrical current or a sudden voltage reduction. For example, a freewheeling semiconductor device can be a diode, a MOSFET, or the like.

As used herein, a "module" that includes or incorporates, runs, operates, or otherwise executes or produces a functional operation or operative outcome, can be incorporated within or included by way of program code stored in a memory or executed by a controller module or processor.

As used herein, a "controller" or "module", for example, "controller module", or "gate driver" can include a component configured or adapted to provide instruction, control, operation, or any form of communication for operable components to affect the operation thereof. Such controllers or modules can include any known processor, microcontroller, or logic device, including, but not limited to: Field Programmable Gate Arrays (FPGA), a Complex Programmable Logic Device (CPLD), an Application-Specific Integrated Circuit (ASIC), a Full Authority Digital Engine Control (FADEC), a Proportional Controller (PC), a Proportional Integral Controller (PI), a Proportional Derivative Controller (PD), a Proportional Integral Derivative Controller (PID), a hardware-accelerated logic controller (e.g. for encoding, decoding, transcoding, etc.), the like, or a combination thereof. While described herein as comprising separate elements, in non-limiting aspects such controllers and modules can be incorporated on one or more devices including a common device, such as a single processor or microcontroller. Non-limiting examples of such controllers or module can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implement particular abstract data types. In another non-limiting example, a controller module, or switching module can also include a data storage component accessible by the processor, including memory, whether transition, volatile or non-transient, or non-volatile memory. Additional non-limiting examples of the memory can include Random Access Memory (RAM), Read-Only Memory (ROM), flash memory, or one or more different types of portable electronic memory, such as discs, DVDs, CD-ROMs, flash drives, Universal Serial Bus (USB) drives, the like, or any suitable combination of these types of memory. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to affect a functional or operable outcome, as described herein.

For the purposes of illustration, exemplary aspects will be described herein in the in the context of an electrical machine, such as an alternating current (AC) power generation source, and an AC to direct current (DC) power converter for an aircraft. The electrical machine can be in the form of a generator, a motor, a permanent magnet generator (PMG), or a starter/generator (S/G), and the like, in non-limiting examples. It will be understood, however, that aspects of the disclosure described herein are not so limited and can have general applicability within other electrical machines or systems. It will be further understood that the disclosure has general applicability to power conversion systems in non-aircraft applications, including other mobile applications and non-mobile industrial and commercial applications. For example, applicable mobile environments can include an aircraft, spacecraft, space-launch vehicle, satellite, locomotive, automobile, etc. Commercial environments can include manufacturing facilities or power generation and distribution facilities or infrastructure. Furthermore, while aspects of the disclosure will be described herein, for brevity of description, in terms of an induction machine, other aspects are not so limited. For example, in non-limiting aspects, the induction machine can include a brushless starter/generator without departing from the scope of the disclosure. It is further contemplated that aspects of the disclosure can incorporate any electrical machine.

As used herein, a "wet" cavity generator includes a cavity housing a rotor and stator that is exposed to free liquid coolant (e.g., coolant freely moving within the cavity). In contrast, a "dry" cavity generator the rotor and stator can be cooled by coolant contained within limited in fluidly sealed passages (e.g., non-freely moving about the cavity). Aspects of the disclosure can be applicable to both wet and dry cavity generators.

Electrical machines, such as conventional wound-rotor generators, are a source of electrical energy for industrial and commercial applications. They are commonly used to convert mechanical power output of steam turbines, gas turbines, reciprocating engines and hydro-turbines into electrical power. Typically, these electrical machines include a central rotatable assembly or "rotor" that is circumscribed by a stationary assembly or "stator". An air gap separates the rotor and stator. The rotor can include a rotatable element defining a central rotational axis and defining a periphery. The rotor typically includes a rotatable shaft and a rotor core having one or more sets of conductive rotor windings. The rotor windings can be wound about the periphery. The rotor windings are typically axially wound around a set of posts or rotor teeth defining slots therebetween. The number of sets of rotor windings typically define the number of electrical phases of the electrical machine. A portion of the windings (e.g., an end turns portion) of conventional rotors typically extend past or overhang the rotor. The rotor winding end turns in some electrical machines are supported and/or covered by a housing, cover, or other structure.

In operation, the rotor of conventional electrical machines is driven to rotate by a source of rotation, such as a mechanical or electrical machine, which for some aircraft may be a gas turbine engine. The rotor is often rotated at relatively high revolutions per minute (rpm) (e.g., 20,000 -500,000 rpm). In many cases, the rotor can spin relative to the stator in response to an electrical current. The electrical current passing through the rotor and stator creates heat. For example, heat is generated in the rotor due to the flow of current through the windings, and changing magnetic fields present in the rotor, causing the temperature to rise in the rotor. Heat can also be caused by, for example, stator core losses due to hysteresis or eddy currents generated during operation. It is desirable to cool the rotor and stator to protect the electrical machine from damage and to increase the electrical machine power density to allow for more power from a smaller physically sized electrical motor.

Furthermore, due to the relatively linear relation between rotational speed and shaft power of an electrical machine, increasing the rated speed of a generator can boost the power density and efficiency of the generator. Accordingly, there is a growing demand for conventional electrical machines to operate at increasingly higher speeds. However, operation of conventional electrical machines at higher speeds can create more heat to be reduced or removed.

In some cases, the heat can be removed by passing air currents across and through the motor. In other cases, oil or other liquid coolant is passed through the electrical motor in proximity to the stator. The liquid coolant typically flows through passages formed in the motor housing adjacent to the stator, and is further passed through the rotor shaft in two directions in a so called double pass arrangement. In still other cases, coolant is passed through passages formed in the stator core. In some cases, the liquid coolant or oil is sprayed on the end turn portion of the rotor windings and stator windings that extend past or overhang the rotor or stator, respectively (e.g., at axial ends of the motor). Typically, heat is removed from the oil by passing the oil through a heat exchanger.

Aircraft gas turbine engines typically include a fan section followed by a core engine having, in serial flow arrangement, a compressor which compresses airflow entering the engine, a combustor which burns a mixture of fuel and air, and a high-pressure turbine section followed by a low pressure turbine section which extracts energy from airflow discharged from the core engine to power the fan section which generates thrust.

Aircraft and aircraft engine accessories are mechanically driven by the engine through a power take-off shaft connected to an engine accessory gearbox. Among the accessories mounted to the gearbox is a starter motor for starting the gas turbine engine and a generator to generate electrical power for the aircraft. It is known to provide a single starter/generator to provide both starting and electrical power generation. Starter/generators with and without brushes, referred to as brushed and brushless, are for electrical generation and starting in aircraft gas turbine engines. Typically, air and/or oil coolers are used for cooling the starter/generators.

The power generated by the starter/generator is typically provided to a power converter before being provided to an electrical load. Power converters typically convert an input voltage waveform into a specified output voltage waveform with controllable frequency, phase, amplitude, or polarity. Power converters can be employed to convert a DC voltage to an AC voltage (DC-AC), or from DC to DC, (e.g., DC-DC) or from AC to DC (e.g., AC-DC). Conventional power converters are often made with one more conversion stages. The conversion stages can also be arranged as a step-down or "buck" converter (e.g., a DC-DC power converter which steps down voltage received at its input (supply) to its output (load)). Alternatively, the conversion stages can also be arranged as a "boost" or step-up converter (e.g., a DC-DC power converter that steps up voltage from its input to its output). Still other converters can be arranged to selectively operate in buck or boost modes.

Asynchronous generators, also known as induction generators, or generator induction machines, are electrical machines, having a rotor and a stator, that convert mechanical energy into alternating current (AC) electricity. An induction generator produces electrical power when its rotor is turned faster than the synchronous speed. (e.g., a rotational speed of the magnetic field within the generator, typically equal to 120 x Frequency) / Number of Poles). Typically, a turbine or engine is coupled to the induction machine rotor to drive the rotor above the synchronous speed. Induction generators are typically more robust, have simpler controls, and lower cost than other generator types such as brushed generators, synchronous generators, and the like.

However, unlike synchronous generators, induction generators cannot self-magnetize. Induction generators utilize a source of reactive excitation current to create magnetizing flux (reactive power) in the stator to induce a rotor current. For example, in some instances, the reactive excitation current can be supplied to the induction generator from an electrical load once the induction generator starts producing power. However, if the electrical load is de-energized, or suffers a voltage drop (e.g., during an electrical fault) the induction generator cannot restart using residual magnetization. Consequently, when operating to provide electrical power to a load, in the event of a fault condition in the load that causes a voltage drop, the induction generator is isolated from the load to avoid a loss of the reactive excitation.

Aspects as disclosed herein enable the use of asynchronous induction generators and asynchronous induction starter/generators in aircraft applications. For example, aspects as disclosed herein advantageously provide a power converter (e.g., an inverter/converter/controller) for an induction starter/generator that can maintain an excitation voltage to the starter generator in the event of a fault condition in the electrical load. It is also desirable to reduce the amount and complexity of cooling apparatus for the starter/generators. Furthermore, by enabling the use of induction starter/generators (e.g., a squirrel cage starter/generator) in an aircraft application, aspects as disclosed herein can further enable the use of shared-oil wet cavity cooling of the induction starter/generator, without a heat exchanger, using a single-pass oil flow through the induction starter/generator which can enable more efficient cooling than conventional multi-pass oil flows.

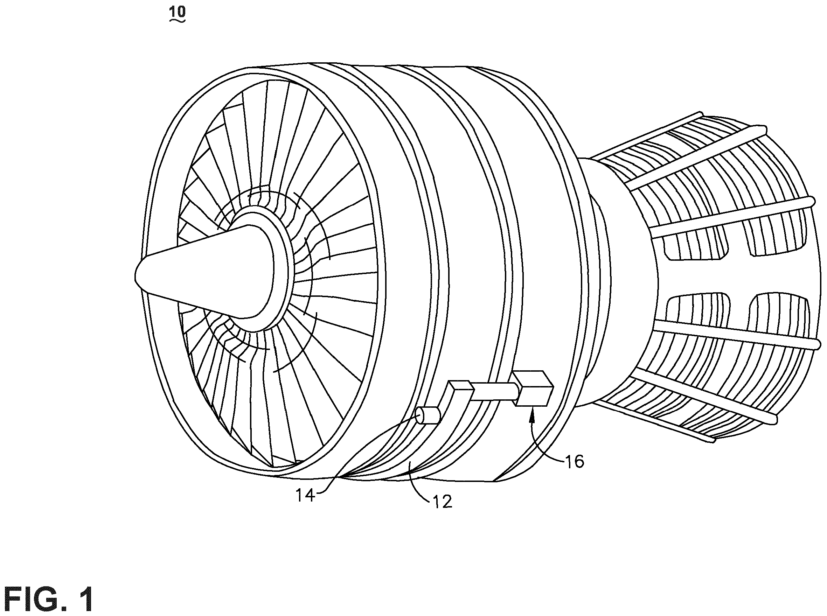

FIG. 1 illustrates a gas turbine engine 10 having an accessory gear box (AGB) 12 and an electric machine or generator 14 according to an aspect of the disclosure. The gas turbine engine 10 can be a turbofan engine, such as a General Electric GEnx or CF6 series engine, commonly used in modern commercial and military aviation or the gas turbine engine 10 could be a variety of other known gas turbine engines, such as a turboprop or turboshaft. The AGB 12 can be coupled to a turbine shaft (not shown) of the gas turbine engine 10 by way of a mechanical power take off 16. The type and specifics of the gas turbine engine 10 are not germane to the disclosure and will not be described further herein. While a generator 14, such as an AC induction generator, is shown and described, aspects of the disclosure can include any electrical machine or generator.

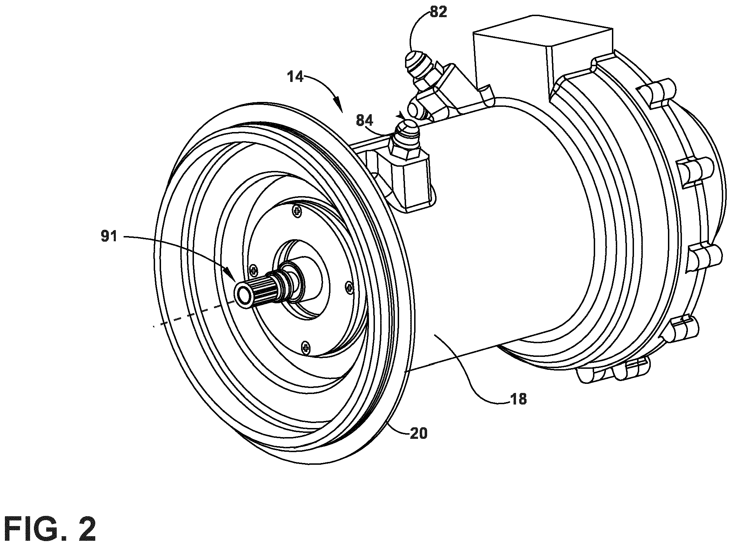

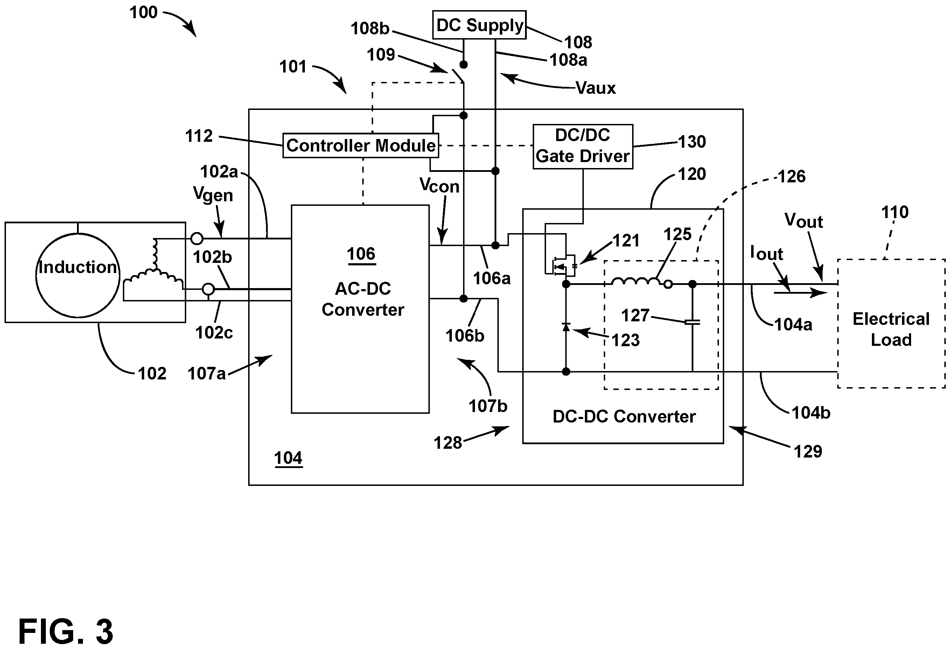

FIG. 2 illustrates a non-limiting example generator 14 and its housing 18 in accordance with non-limiting aspects of the disclosure. The generator 14 can include a clamping interface 20 used to clamp the generator 14 to the AGB (not shown). Multiple electrical connections can be provided on the exterior of the generator 14 to provide for the transfer of electrical power to and from the generator 14. For example, the electrical connections can be further connected by cables to a power converter (for example, as shown in FIG. 3), and then to an electrical power distribution node (not shown) of an aircraft having the gas turbine engine 10 to power various items on the aircraft, such as an energizing electrical environmental control system, highly transient electrical loads, electrical deicing loads, lights, and seat-back monitors. In one non-limiting example, further components (e.g., the converter, or the like), can be integral with the generator 14, or can be located remotely, apart from, or separate from the generator 14. The generator 14 can include a liquid coolant system for cooling or dissipating heat generated by components of the generator 14 or by components proximate to the generator 14, one non-limiting example of which can be the gas turbine engine 10. For example, the generator 14 can include a liquid cooling system using oil as a coolant.

The liquid cooling system can include a cooling fluid inlet port 82 and a cooling fluid outlet port 84 for controlling the supply of coolant to the generator 14. In one non-limiting example, the cooling fluid inlet and outlet ports 82, 84 can be utilized for cooling at least a portion of a rotor or stator of the generator 14. The liquid cooling system can also include a second coolant outlet port 91, shown at a rotatable shaft portion of the generator 14. While not shown, aspects of the disclosure can further include other liquid cooling system components, such as a liquid coolant reservoir fluidly coupled with the cooling fluid inlet port 82, a rotatable shaft coolant inlet port, the cooling fluid outlet port 84, or a generator coolant outlet port, and a liquid coolant pump to forcibly supply the coolant through the ports 82, 84 or generator 14. While a liquid cooling system for a dry cavity generator is shown and described for understanding, aspects of the disclosure are applicable for any wet or dry cavity generator. For example, as discussed in more detail herein, aspects can include a wet cavity generator, such as a shared-oil wet cavity generator.

FIG. 3 is a block diagram of a power converter system 100 coupleable to an electrical load 110, in accordance with a non-limiting aspect. The power converter system 100 can include an induction generator 102 electrically coupled to a power converter 101. In non-limiting aspects, the induction generator 102 can be an induction starter/generator. For example, in non-limiting aspects, the induction generator 102 can be an asynchronous induction generator such as a squirrel-cage induction machine. In some non-limiting aspects the induction generator 102 can be a wet cavity machine.

The power converter 101 can include an inverter/converter/controller (ICC) 104. The ICC 104 can include an AC-DC converter 106, a DC-DC converter 120, a DC-DC gate driver 130, and a controller module 112. In non-limiting aspects, the DC-DC converter 120 can include a semiconductor switching device 121, an inductor 125, a filter capacitor 127, and a freewheeling semiconductor device, such as a freewheeling diode 123. The inductor 125 and the filter capacitor 127 can be arranged to cooperatively define a choke or inductor-capacitor (LC) filter 126. In non-limiting aspects, the power converter 101 can include an auxiliary DC power source 108 and a switching device 109.

As will be discussed in more detail herein, in non-limiting aspects, the ICC 104 can be configured with a bidirectional topology. In such aspects, a direction of a flow of electrical power between the induction generator 102 and the electrical load 110, can depend on an operating mode of the system 100. In one instance, the bi-directional topology can enable the ICC 104 to selectively receive an AC electrical power input from the induction generator 102, and provide a DC electrical power output to the electrical load 110 in a first mode of operation (e.g., a generator mode). In another instance, the bi-directional topology can enable the ICC 104 to selectively receive a DC electrical power input from the electrical load 110 and provide an AC electrical power output to the induction generator 102 in a second mode of operation (e.g., a starter mode). For brevity of description, unless stated otherwise, elements of the system 100 will be discussed and labelled herein in the context of the first mode of operation, with AC electrical power received by the ICC 104 as an input from the induction generator 102 with a DC electrical power output provided by the ICC 104 to the electrical load 110.

The AC-DC converter 106 includes a first end 107a (e.g., an AC input end) and a second end 107b (e.g., a DC output end). The induction generator 102 can be electrically coupled to the first end 107a of the AC-DC converter 106 by a set of generator AC power lines 102a, 102b, 102c to provide an AC voltage Vgen (e.g., a 3-phase AC voltage) thereto.

The AC-DC converter 106 can be electrically coupled at the second end 107b to the DC-DC converter 120 via a first DC power line 106a and a second DC power line 106b to provide a first DC voltage Vcon thereto. For example, in non-limiting aspects, the first DC power line 106a can be a positive DC bus, and the second DC power line 106b can be a negative DC bus.

The DC-DC converter 120 includes a first end 128 (e.g., a DC input end) and a second end 129 (e.g., a DC output end). The DC-DC converter 120 is coupled to the second end 107b of the AC-DC converter 106. For example, the first end 128 of the DC-DC converter 120 can be electrically coupled to the first and second DC power lines 106a, 106b (e.g., a positive DC bus, and a negative DC bus, respectively).

The DC-DC converter 120 can be electrically coupled to the electrical load 110 via a first ICC output line 104a, and a second ICC output line 104b, at the second end 129 of the DC-DC converter 120. The DC-DC converter 120 can be configured to provide an ICC output current Iout at a second DC voltage Vout to the electrical load 110 via the first ICC output line 104a, and the second ICC output line 104b. The second DC voltage output Vout can be defined between the first and second ICC output lines 104a, 104b. For example, in non-limiting aspects, the first ICC output line 104a can be a positive DC bus and the second ICC output line 104b can be a negative DC bus. In non-limiting aspects, the second ICC output line 104b can be coupled to an electrical ground.

As will be discussed in more detail herein, the first DC output voltage Vcon of the AC-DC converter 106 can be equal to the second DC voltage output Vout of the DC-DC converter 120 in a first mode of operation of the DC-DC converter, and the first DC output voltage Vcon can be greater than the second DC output voltage Vout in a second mode of operation of the DC-DC converter.

The auxiliary DC power source 108 is configured to provide a third DC voltage Vaux. In non-limiting aspects, the auxiliary DC power source 108 can be for example, a battery, a supercapacitor, or a DC bus. The auxiliary DC power source 108 can be selectively coupled via a switching device 109 to the second end 107b of the AC-DC converter 106. For example, in non-limiting aspects, an output of the auxiliary DC power source 108 can be electrically coupled to the first DC power line 106a via a first auxiliary DC output line 108a, and electrically coupled to the second DC power line 106b via a second auxiliary DC output line 108b to provide the third DC voltage thereto.

The controller module 112 can be communicatively coupled to the switching device 109, the AC-DC converter 106, and the DC-DC gate driver 130 to control a respective operation thereof. In non-limiting aspects, the auxiliary DC power source 108 can be electrically coupled to the controller module 112 to supply the power thereto.

In non-limiting aspects, the semiconductor switching device 121 can be an N-channel MOSFET, as shown. In non-limiting aspects, The inductor125 can be electrically coupled in series between the semiconductor switching device121 and the first ICC output line 104a. For example, one end of the semiconductor switching device 121 (e.g., a drain terminal) can be connected to the first DC power line 106a (e.g., a positive DC bus), and another end (e.g. a source terminal) of the semiconductor switching device 121 can be connected to the first ICC output line 104a (e.g., a positive DC bus) via the inductor 125. In non-limiting aspects, the inductor 125 can be electrically coupled at a first end to a source terminal of the semiconductor switching device 121 and at a second end to the first ICC output line 104a, or the electrical load 110. The freewheeling diode 123 can be electrically coupled in parallel to the LC filter 126 defined by the inductor 125 and the filter capacitor 127. For example, the freewheeling diode 123 can be electrically coupled at a cathode end to a source terminal of the semiconductor switching device 121 and at an anode end to the second ICC output line 104b or ground. The filter capacitor 127 can be electrically coupled between the first and second DC power lines 106a, 106b.

In the illustrated aspect, the induction generator 102 can be a starter/generator. In one non-limiting example, the induction generator 102 can be configured as an electrical generator rated at 47,000 rpm with a generator speed range of from approximately 29,140 rpm to 47,000 rpm. For example, in non-limiting aspects, the induction generator 102 can be a high-speed, squirrel-cage, hairpin winding stator, 3-phase induction machine configured to provide an AC voltage Vgen of approximately 115VAC for a 120VDC system output. In other non-limiting exemplary aspects, the induction generator 102 can be configured to provide an AC voltage Vgen of approximately 230VAC for a +/-270VDC system output during an operation as a generator. In still other aspects, the induction generator 102 can be configured to provide any output phase voltage without departing from the scope of the disclosure.

The ICC 104 can include the AC-DC converter 106 configured to convert the AC voltage Vgen of the induction generator 102 to the first DC voltage Vcon. For example, in non-limiting aspects, the ICC 104 can be configured to convert the AC voltage Vgen to 270VDC for an output voltage Vout of 270VDC, or 540VDC for an output voltage Vout of +/-270VDC.

In non-limiting aspects, in operation, the ICC 104 can selectively operate in one of a starter mode or a generator mode. For example, during a start-up or excitation operation of the induction generator 102, the ICC 104 can operate in the starter mode. During operation in the starter mode, the AC-DC converter 106 can operate as a DC-AC inverter, allowing an electrical power flow from the electrical load 110 to the induction generator 102. In such an instance, the second end 107b of the AC-DC converter 106 can be an input end, and the first end 107a can be an output end.

Alternatively, after the induction machine is started (e.g., the induction generator 102 is rotating faster than its synchronous speed) the ICC 104 can operate in the generator mode. During operation in the generator mode, the AC-DC converter 106 can operate as an AC-DC converter allowing electrical power flow from the induction generator 102 to the electrical load 110. In such an instance, the first end 107a of the AC-DC converter 106 can be an input end, and the second end 107b can be an output end.

In various non-limiting aspects, the auxiliary DC power source 108 selectively provide electrical power to the AC-DC converter 106 or the DC-DC converter 120 depending on the operating mode of the ICC 104. For example, as illustrated, the auxiliary DC power source 108 can be selectively coupled to the first DC power line 106a and the second DC power line 106b at the second end 107b of the AC-DC converter 106 and the first end 128 of the DC-DC converter.

Accordingly, when the ICC 104 is operating in the starter mode, the auxiliary DC power source 108 can enable an initial excitation current to the induction generator 102 by providing DC electrical power to the AC-DC converter 106 (e.g., at the second end 107b).

Conversely, when the ICC 104 is operating in the generator mode, the auxiliary DC power source 108 can provide DC power to the DC-DC converter 120. For example, in non-limiting aspects, the auxiliary DC power source 108 can be electrically coupled to the DC-DC gate driver 130 to selectively provide control power thereto and control an operation thereof. In other non-limiting aspects, the auxiliary DC power source 108 can additionally or alternatively provide DC power to the DC-DC converter 120 to compensate for any power losses in the AC-DC converter 106.

Regardless of whether the ICC 104 is operating in the starter mode or the generator mode, the auxiliary DC power source 108 can further provide DC power to the controller module 112 to power an operation thereof. Additionally, or alternatively, in some non-limiting aspects, when the ICC 104 is operating in the generator mode, the output of the AC-DC converter 106 can supply the power to the control module 112. In this way, in some non-limiting aspects, the auxiliary DC power source 108 and the AC-DC converter 106 can be a redundant pair.

When operating in the generator mode, the DC-DC converter 120 can operate based an operating condition in the electrical load 110. For example, the DC-DC converter 120, can operate based on a "normal" no-fault (e.g., lacking an electrical fault in the electrical load 110) or first operating condition, or, in the event of an electrical fault (e.g., a short circuit in the electrical load) the DC-DC converter 120, can operate based on a fault or second operating condition.

In operation, when the ICC 104 is operating in the generator mode (e.g., with the induction generator 102 running, and the AC-DC converter 106 providing the DC voltage Vcon to the DC-DC converter 120) and the electrical load 110 is operating in a "normal", or non-faulted state (e.g., no short-circuit fault present in the electrical load 110), the controller module 112 is configured to control the DC-DC converter 120 based on the first operating condition. In the first operating condition, the controller module 112 controls operation of the DC/DC gate driver 130 to maintain the semiconductor switching device 121 in a conducting state (e.g. a substantially "constant-on" state) with the freewheeling diode 123 in a non-conducting state, and the inductor 125 fully charged (e.g., acting substantially as a short-circuit). In this first operating condition, the DC-DC converter 120 operates substantially as an LC filter, (e.g., via the LC filter 126). In the first operating condition, the first DC output voltage Vcon (e.g., the input voltage to DC-DC converter 120 via the first and second DC power lines 106a, 106b) can be equal to the second DC output voltage Vout (e.g., the output voltage of the DC-DC converter 120 at the first and second ICC output lines 104a, 104b.

When the ICC 104 is operating in the generator mode, and the electrical load 110 is in a faulted state (e.g., a short-circuit fault event in the electrical load 110), the controller module 112 can control the DC-DC converter 120 in the second operating condition based on the fault in the electrical load 110. In non-limiting aspects, the DC-DC converter 120 can operate in the second operating condition for a predetermined period of time. It will be appreciated that as a consequence of a short-circuit fault in the electrical load 110, the second DC output voltage Vout will drop significantly (e.g., from 270 Volts DC to about 2.7 volts DC). When operating in the second operating condition, the DC-DC converter 120 can operate as a voltage-reducing DC buck converter and perform a closed-loop control based on the first DC output voltage Vcon of the AC-DC converter 106 (e.g., across the first and second DC power lines 106a, 106b). For example, the controller module 112 can be configured to control the DC-DC gate driver 130 to output a driving signal (e.g. a PWM control signal) to the semiconductor switching device 121 to adjust a duty cycle of the semiconductor switching device 121. The duty cycle of the semiconductor switching device 121 can determine an average DC voltage and/or current applied to the electrical load 110 via the first and second ICC output lines 104a, 104b.

It will be appreciated that the semiconductor switching device 121 can have a relatively low resistance when on or conducting, and a relatively high resistance when off, or non-conducting. Little power is dissipated in the semiconductor switching device 121 when conducting. When the semiconductor switching device 121 turns off (e.g., based on the driving signal from the DC-DC gate driver 130), the freewheeling diode 123 operates to provide a path for the induced current (e.g., from the inductor 125) to flow, thereby preventing a voltage spike across the semiconductor switching device 121 during turn-off.

During an operation in the second operating condition, the controller module 112 can control the operation of the DC-DC gate driver 130 to arrange a predetermined relatively low duty cycle (e.g., less than 1) and thereby limit the output current Iout of the ICC 104 to a predetermined relatively low value (e.g., 10 percent of an output current Iout provided during the first condition, just prior to the fault), until the short-circuit fault condition in the electrical load 110 is cleared. In this way, the DC-DC converter 120, when operating in the second operating condition, maintains the first DC output voltage Vcon at the output of the AC-DC converter 106, while dropping or reducing the second DC output voltage Vout at the output of the ICC 104. By maintaining the first DC output voltage Vcon at the output of the AC-DC converter 106, aspects can maintain the excitation voltage of the induction generator 102 . In this sense, the DC-DC converter 120 isolates the AC-DC converter 106 and the induction generator 102 from a sudden voltage drop and relatively large fault currents typically associated with short-circuit faults in the electrical load 110 that would otherwise occur.

It will be appreciated that a practical duration of the second operating mode (e.g., a duration of the output current Iout during operation in the second operating condition) can be limited by a variety of factors, such as the size of inductor 125, and the total impedance of the electrical load 110. As such, the duration of the second operating condition can be predetermined, for example by selecting a size of the inductor 125, or adjusting the duty cycle of the semiconductor switching device 121, or both, depending on the particular instance, to allow a predetermined amount of time (e.g., 3.4 -4.7 seconds) to clear the short-circuit fault in the electrical load 110.

It is contemplated that for short-circuit faults lasting longer than the predetermined amount of time (e.g., longer than 4.7 seconds) an automatic disconnect switch (not shown) such as a circuit breaker can be disposed electrically in series between the DC-DC converter 120 and the electrical load, to enable automatic fault detection and short circuit protection and coordination for the ICC 104 and the induction generator 102 .

It should be noted that the topology of the DC-DC converter 120 of FIG. 3 is merely illustrative and is not intended to limit the present disclosure. For example, while semiconductor freewheeling device of FIG. 3 is shown and described as a freewheeling diode 123, other aspects are not so limited. For example, in other non-limiting aspects, the freewheeling diode 123 of FIG. 3 can be replaced another semiconductor freewheeling device such as a MOSFET, with one end of the MOSFET (e.g. a drain terminal) electrically coupled to a source terminal of the semiconductor switching device 121 and another end of the MOSFET (e.g., a source terminal) electrically coupled to the second ICC output line 104b or ground. An operation of the MOSFET can be controlled by the controller module 112.

For ease of description and understanding, the semiconductor switching device 121 is depicted in the exemplary non-limiting aspect of FIG. 3 as comprising a single semiconductor switching device 121. However, aspects having any number of semiconductor switching devices for the semiconductor switching device 121 are also contemplated. Moreover, the semiconductor switching device 121 is discussed and described herein as comprising a SiC MOSFET. Other aspects are not so limited, and the ICC 104 can include other types of switching devices. Other non-limiting examples of the semiconductor switching device 121 can include transistors, gate commutated thyristors, FETs, MOSFETs, IGBTs, gate turn-off thyristors, static induction transistors, static induction thyristors, or combinations thereof. Furthermore, materials used to form the semiconductor switching device 121 can include, but are not limited to, silicon (Si), germanium (Ge), SiC, gallium nitride (GaN), or combinations thereof.

As disclosed herein, in the event of a short-circuit fault on the electrical load 110, aspects can electrically isolate the induction generator 102 and AC-DC converter 106 via operation of the DC-DC converter 120 by maintaining the first DC output voltage Vcon, while dropping the second DC output voltage Vout in a controlled manner. Such aspects can overcome some of the aforementioned shortcomings of synchronous generators (e.g., squirrel cage induction motor/generators) and brushed DC generators, and enable the use of asynchronous generators for example in aviation applications.

For example, aspects as disclosed herein advantageously provide a power converter (e.g., an inverter/converter/controller) can maintain an excitation voltage to the starter generator in the event of a fault condition in the electrical load. Aspects as disclosed herein can also reduce the amount and complexity of cooling apparatus for the starter/generators. Furthermore, by enabling the use of a squirrel cage starter/generator in an aircraft application, aspects as disclosed herein can further enable the use of shared-oil wet cavity cooling of the squirrel cage starter/generator without a heat exchanger, using a single-pass oil flow through the induction starter/generator which can enable more efficient cooling than conventional multi-pass oil flows.

Furthermore, use of an asynchronous type squirrel-cage construction for the induction generator 102 can beneficially eliminate the use of a rotating rectifier, as is typically used with synchronous generators. Furthermore, asynchronous generator induction machines can further omit or reduce varnish or other insulative coatings typically used on the rotor windings of synchronous generators and brushed DC generators. The coatings typically provided on synchronous generator motor windings generally prevent the use of oil to cool the rotor windings because the varnish can often contaminate the oil when circulated along the rotor core and rotor windings. As such, use of the asynchronous type squirrel cage construction for the induction generator 102 can further beneficially enable the use of a shared-oil "wet cavity" cooling system for the motor, thereby eliminating the use of an oil sump, and reducing the size, weight and cost of the generator. A shared-oil system, "wet cavity" construction can reduce or eliminate gearbox oil contamination commonly experienced in a "wet cavity/spray oil cooled' system such as when generator insulation and/or varnish materials age.

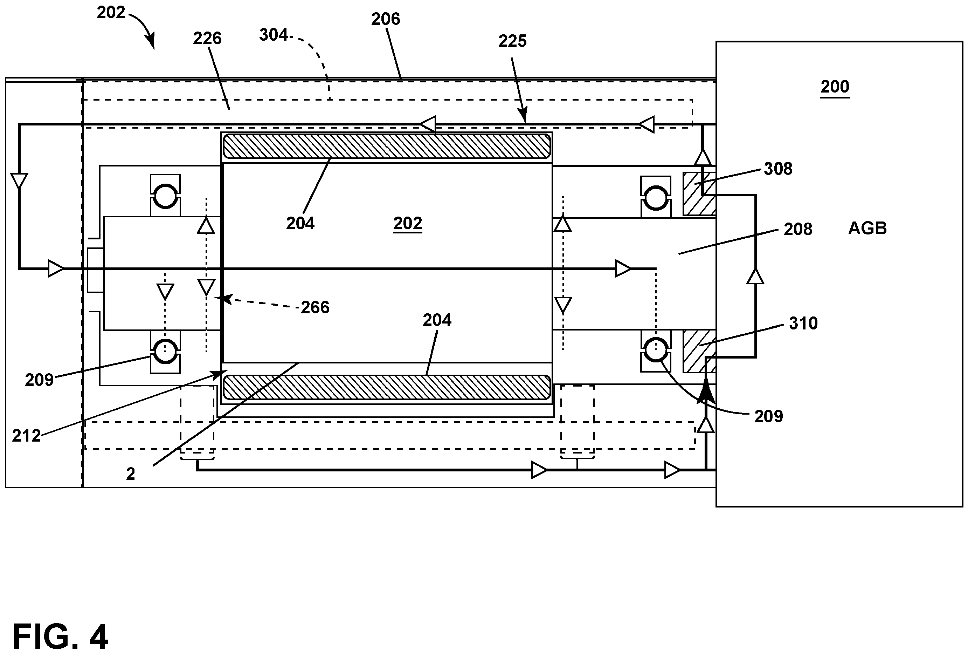

FIG. 4 is a schematic block diagram of an exemplary generator induction machine 202 and engine accessory gearbox (AGB) 200 with some parts omitted for clarity. The generator induction machine 202 and the AGB 200 have a shared-oil, wet cavity cooling system. In a shared-oil, wet cavity cooling system, cooling oil is shared between the generator induction machine 202 and the AGB 200. A single-pass oil circuit 225 is indicated by a series of solid lines, with arrow heads indicating a direction of a flow of oil, with an oil spray 266 portion of the single-pass oil circuit 225 indicated by dashed lines with arrow heads indicating a direction of the oil spray 266. The single-pass oil circuit 225 is in fluid communication with the AGB 200.

The generator induction machine 202 can be fluidly coupled with the AGB 200. The generator induction machine 202 can be an asynchronous induction machine comprising a rotor 205 (e.g., a high-speed squirrel cage rotor), a stator 204, and a housing 206. A gap 212 is defined between the stator 204 and the rotor 205. The rotor 205 and stator 204 can be enclosed within the housing 206. The housing 206 is mounted externally to the AGB 200. The rotor 205 can include a rotatable hollow shaft 208 that defines a portion of the single-pass oil circuit 225. The hollow shaft 208 is supported by internal bearings 209 of the induction generator 102. The single pass oil circuit 225 is further in fluid communication with the rotor 205 and stator 204.

The housing 206 can be formed by any known materials and methods, including, but not limited to, die-casting of high strength and lightweight metals such as aluminum, stainless steel, iron, or titanium. The housing 206 can be formed with a thickness that provides mechanical rigidity without adding unnecessary weight to the full assembly and, therefore, the aircraft.

The rotatable hollow shaft 208 can be constructed by any known materials and methods, including, but not limited to, extrusion or machining of high strength metal alloys such as those containing aluminum, iron, nickel, chromium, titanium, tungsten, vanadium, or molybdenum.

The stator 204 is held stationary relative to the rotor 205. The stator 204 can be formed of steel core laminations supporting copper magnet wire coils such as hairpin wires (not shown). In an exemplary aspect, the coils can be configured to define a fixed number of magnetic poles. **In** non-limiting aspects, the rotor 205 can include a steel laminated core defining a set of circumferentially spaced slots, and supporting a set of aluminum or copper bars disposed within the slots (not shown). The hollow shaft 208 is rotatably coupled to a rotatable AGB shaft (not shown).

**In** non-limiting aspects, the single-pass oil circuit 225 includes an oil jacket 226 at least partially circumscribing an outer periphery of the stator 204. In some aspects, the oil jacket 226 can be integrally formed with the housing 206. The oil jacket 226 can define cooling channels or passages 304 for a single-pass oil flow through the oil circuit. The passages 304 can extend helically, axially, radially, or in any combination thereof. The oil can flow through the single-pass oil circuit 225 from the passages 304 and into the hollow shaft 208. The rotatable hollow shaft 208 can further define apertures (not shown) extending radially therethrough. The oil can flow from the rotatable hollow shaft 208, through the apertures and spray radially outward onto end turns of the rotor 205 and stator 204 (e.g., at axial ends of the generator induction machine 202). The oil can further spray outward from the rotatable hollow shaft 208 onto the internal bearings 209. The sprayed oil can be collected in a passage 304 and returned back to the AGB 200. The oil flow is shared between the AGB 200 and the generator induction machine 202 through oil fittings 308, 310 fluidly coupling the AGB 200 and the induction generator 102. In this way, heat generated in the generator induction machine 202 is removed by the oil (not shown) through convection and conduction to the AGB 200. The shared-oil wet cavity cooling system having the single-pass oil circuit 225 eliminates the use of a large sump or reservoir, a dedicated heat exchanger, or an oil pump as typically used in conventional shared-oil systems. Additionally, since the asynchronous type squirrel-cage type generator induction machine 202 does not have a floating rectifier nor varnished rotor windings, as typically used in synchronous generator induction machines, in operation, oil flowing through the single-pass oil circuit 225 does not encounter a rotating rectifier or any insulative coatings (e.g., varnish) which could degrade the oil.

Many other possible embodiments and configurations in addition to that shown in the above figures are contemplated by the present disclosure. Additionally, the design and placement of the various components such as the starter/generator the power converter, the AGB, or components thereof can be rearranged such that a number of different in-line configurations could be realized.

To the extent not already described, the different features and structures of the various aspects can be used in combination with each other. That one feature cannot be illustrated in all the aspects is not meant to be construed that it cannot be, but is done for brevity of description. Thus, the various features of the different aspects can be mixed and matched to form new aspects, whether or not the new aspects are expressly described. Combinations or permutations of features described herein are covered by this disclosure.

This written description uses examples to disclose aspects of the disclosure, including the best mode, and to enable any person skilled in the art to practice aspects of the disclosure, including making and using any devices or systems and performing any incorporated methods. The features disclosed in the foregoing description, or in the accompanying drawings, can, both separately and in any combination thereof, be material for realizing the disclosure in diverse forms thereof.

Various characteristics, aspects and advantages of the present disclosure may also be embodied in any permutation of aspects of the disclosure, including but not limited to the following technical solutions as defined in the enumerated aspects:

A power converter electrically coupleable between an induction generator and an electrical load, the power converter comprising: an
inverter/converter/controller (ICC) electrically couplable to the induction generator, the ICC comprising: an AC-DC converter electrically coupled at a first end to the induction generator to receive an AC voltage therefrom and configured to output a first DC voltage at a second end; a DC-DC converter, electrically coupled, via a first DC power line and a second DC power line, to the second end of the AC-DC converter to receive the first DC voltage therefrom, the DC-DC converter electrically coupleable to the electrical load via a first DC output line and a second DC output line to provide a second DC voltage thereto, the DC-DC converter including: a semiconductor switching device electrically coupled to the first DC power line; and an inductor electrically coupled in series between the semiconductor switching device and the first DC output line; and
a controller module communicatively coupled to the DC-DC converter, and configured to control an operation of the semiconductor switching device; wherein under a first operating condition, the semiconductor switching device is configured to operate at a duty cycle substantially equal to 1; and wherein under a second operating condition, in response to a short-circuit fault in the electrical load, the semiconductor switching device is configured to operate at a duty cycle less than 1.

The power converter of any preceding clause, further comprising a capacitor coupled the first DC output line and the second DC output line, and wherein during an operation under the first operating condition, the inductor and capacitor define a choke.

The power converter of any preceding clause, further comprising a freewheeling semiconductor device electrically coupled between the semiconductor switching device and the second DC output line.

The power converter of any preceding clause, wherein the freewheeling semiconductor device is a diode, electrically coupled at a cathode end to the semiconductor switching device and electrically coupled at an anode end to the second DC output line.

The power converter of any preceding clause, further comprising an auxiliary DC power source selectively electrically coupled to the first DC power line and the second DC power line.

The power converter of any preceding clause, wherein under the first operating condition, the semiconductor switching device is configured to operate in a constant on state.

The power converter of any preceding clause, wherein in the second operating condition, the DC-DC converter is further configured to operate as a DC buck converter.

The power converter of any preceding clause, wherein the DC-DC converter is configured to operate under the second operating condition for a predetermined period of time.

The power converter of any preceding clause, wherein, under the first operating condition, the first DC voltage is substantially equal to the second DC voltage.

The power converter of any preceding clause, wherein, under the second operating condition, the first DC voltage is greater than the second DC voltage.

The power converter of any preceding clause, wherein the controller module is further communicatively coupled to the AC-DC converter, and configured to control an operation thereof.

The power converter of any preceding clause, wherein the ICC is arranged with a bi-directional topology.

A power converter system electrically coupleable to an electrical load, the system comprising: an asynchronous induction generator; an ICC electrically coupled to the asynchronous induction generator, the ICC comprising: an AC-DC converter electrically coupled at a first end to the asynchronous induction generator to receive an AC voltage therefrom and configured to output a first DC voltage at a second end; a DC-DC converter, electrically coupled, via a first DC power line and a second DC power line, to the second end of the AC-DC converter to receive the first DC voltage therefrom, the DC-DC converter electrically coupleable to the electrical load via a first DC output line and a second DC output line to provide a second DC voltage thereto, the DC-DC converter including: a semiconductor switching device electrically coupled to the first DC power line; a freewheeling semiconductor device electrically coupled between the semiconductor switching device and the second DC output line; and an inductor electrically coupled at a first end to the semiconductor switching device, and at a second end to the first DC output line; a controller module communicatively coupled to the DC-DC converter, and configured to control an operation of the semiconductor switching device; wherein under a first operating condition, the semiconductor switching device is configured to operate at a duty cycle substantially equal to 1; and wherein under a second operating condition, in response to a short-circuit fault in the electrical load, the semiconductor switching device is configured to operate at a duty cycle less than 1.

The power converter system of any preceding clause, further comprising an auxiliary DC power source selectively electrically coupled to the first DC power line and the second DC power line.

The power converter system of any preceding clause, wherein the asynchronous induction generator is a squirrel-cage induction machine.

The power converter system of any preceding clause, wherein the asynchronous induction generator is arranged as a starter/generator having a starter mode of operation and a generator mode of operation.

The power converter system of any preceding clause, wherein the asynchronous induction generator is a wet-cavity machine.

The power converter of any preceding clause, wherein the asynchronous induction generator is fluidly coupled with an accessory gear box (AGB).

The power converter system of any preceding clause, wherein the asynchronous induction generator receives a flow of oil from the AGB.

The power converter system of any preceding clause, wherein the asynchronous induction generator includes a stator, a rotor, and further defines a single-pass oil circuit therethrough in fluid communication with the rotor and stator.

An induction machine brushless generator (BG) system coupleable to an electrical load, the BG system comprising: a BG generator induction machine electrically coupled to an inverter/converter/controller (ICC), the ICC comprising: an AC-DC converter electrically coupled at a first end to the brushless generator induction machine to receive an AC voltage therefrom and to supply a first DC voltage at an output; a DC-DC converter module, electrically coupled to a second end of the AC-DC converter to receive the first DC voltage therefrom via a first output line and a second output line, the DC-DC converter module including: a first semiconductor switching device electrically coupled to the AC-DC converter at the first output line; and an inductor coupled electrically in series between the first semiconductor switching device and the electrical load, wherein under a first operating mode, the DC-DC converter module is configured to operate as an inductor-capacitor (LC) filter, and wherein under a second operating mode, having a short-circuit fault in the electrical load, the DC-DC converter module is configured to prevent a voltage drop of the first DC voltage.

The BG system of any preceding clause, wherein the brushless generator induction machine is a shared oil wet cavity machine.

The BG system of any preceding clause, wherein under the first operating mode, the first semiconductor switching device is configured to operate in a constant on state.

The BG system of any preceding clause, wherein under the second operating mode, the first semiconductor switching device is configured to operate with a duty cycle less than 1.

The BG system of any preceding clause, wherein in the second operating mode, the DC-DC converter module is configured to operate as a DC buck converter.

The BG system of any preceding clause, wherein the DC-DC converter module is configured to operate in a DC buck converter mode for a predetermined period of time.

The BG system of any preceding clause, wherein the DC-DC converter module further comprises a freewheeling diode.

The BG system of any preceding clause, wherein the DC-DC converter module further comprises a second semiconductor switch.

The BG system of any preceding clause, wherein the DC-DC converter module further comprises a filter capacitor.

The BG system of any preceding clause, wherein the brushless generator induction machines an asynchronous squirrel-cage induction machine.

## Claims

1. A power converter (101) electrically coupleable between an induction generator (102) and an electrical load (110), the power converter (101) comprising:
an inverter/converter/controller (ICC) (104) electrically couplable to the induction generator (102), the ICC (104) comprising:
an AC-DC converter (106) electrically coupled at a first end (107a) to the induction generator (102) to receive an AC voltage (Vgen) therefrom and configured to output a first DC voltage (Vcon) at a second end (107b);
a DC-DC converter (120), electrically coupled, via a first DC power line (106a) and a second DC power line (106b), to the second end (107b) of the AC-DC converter (106) to receive the first DC voltage (Vcon) therefrom, the DC-DC converter (120) electrically coupleable to the electrical load (110) via a first DC output line (104a) and a second DC output line (104b) to provide a second DC voltage (Vout) thereto, the DC-DC converter (120) including:
a semiconductor switching device (121) electrically coupled to the first DC power line (106a); and
an inductor (125) electrically coupled in series between the semiconductor switching device (121), and the first DC output line (104a); and
a controller module (112) communicatively coupled to the DC-DC converter (120), and configured to control an operation of the semiconductor switching device (121);
wherein under a first operating condition, the semiconductor switching device (121) is configured to operate at a duty cycle substantially equal to 1; and
wherein under a second operating condition, in response to a short-circuit fault in the electrical load (110), the semiconductor switching device (121) is configured to operate at a duty cycle less than 1.

2. The power converter (101) of claim 1, further comprising a capacitor (127) coupled between the inductor (125) first DC output line (104a) and the second DC output line (104b), and wherein during an operation under the first operating condition, the inductor (125) and capacitor (127) define a choke.

3. The power converter (101) of any preceding claim, further comprising a freewheeling semiconductor device (123) electrically coupled between the semiconductor switching device (121) and the second DC output line (104b).

4. The power converter (101) of claim 3, wherein the freewheeling semiconductor device (123) is a diode, electrically coupled at a cathode end to the semiconductor switching device (121) and electrically coupled at an anode end to the second DC output line (104b).

5. The power converter (101) of any preceding claim, further comprising an auxiliary DC power source (108) selectively electrically coupled to the first DC power line (106a) and the second DC power line (104b).

6. The power converter (101) of any preceding claim, wherein under the first operating condition, the semiconductor switching device (121) is configured to operate in a constant on state.

7. The power converter (101) of any preceding claim, wherein in the second operating condition, the DC-DC converter (120) is further configured to operate as a DC buck converter.

8. The power converter (101) of any preceding claim, wherein, under the first operating condition, the first DC voltage (Vcon) is substantially equal to the second DC voltage (Vout).

9. The power converter (101) of any preceding claim, wherein, under the second operating condition, the first DC voltage (Vcon) is greater than the second DC voltage (Vout).

10. A power converter system (100) including the power converter (101) of any of claims 1-9, electrically coupleable to an electrical load (110), the system (100) comprising:
an asynchronous induction generator (102) electrically coupled to the ICC (104).

11. The power converter system (100) of claim 10, wherein the asynchronous induction generator (102) is arranged as a starter/generator having a starter mode of operation and a generator mode of operation.

12. The power converter system of claim 10, wherein the asynchronous induction generator (102) is a squirrel-cage induction machine.

13. The power converter system (100) of claim 10, wherein the asynchronous induction generator (102) is a wet-cavity machine.

14. The power converter system (100) of claim 13, wherein the asynchronous induction generator (102) is fluidly coupled with an accessory gear box (AGB) (200).

15. The power converter system (100) of claim 14, wherein the asynchronous induction generator (102) includes a stator (204), a rotor (205), and further defines a single-pass oil circuit (225) therethrough in fluid communication with the rotor (205) and stator (204).
